# EUROPÄISCHE PATENTSCHRIFT

(11) **EP 2 186 635 B1**
(45) Veröffentlichungstag und Bekanntmachung des Hinweises auf die Patenterteilung: **22.04.2015**
(21) Anmeldenummer: 09175374.9
(22) Anmeldetag: 09.11.2009
(51) Int. Cl.: B32B 33/00, B44C 5/04, D21H 27/28

(54) **Verfahren zum Beschichten von Holzwerkstoffplatten mit einer Verschleißschicht und dadurch hergestellte Holzwerkstoffplatten**
Method for coating composite wood boards with a wear layer and composite wood boards so obtained
Méthode pour revêtir des plaques de matière dérivée du bois avec une couche d'usure et plaques ainsi obtenues

(30) Priorität: 13.11.2008 DE 102008057262
(43) Veröffentlichungstag der Anmeldung: 19.05.2010
(73) Patentinhaber: Flooring Technologies Ltd., Pieta PTA 9044 (MT)
(72) Erfinder:
(74) Vertreter: Kalkoff & Partner

(56) Entgegenhaltungen:
- WO-A1-02/066265
- WO-A2-2006/013463
- US-A1- 2007 184 244

## Beschreibung

Die Erfindung betrifft ein Verfahren zum Herstellen von Holzwerkstoffplatten mit einer Verschleißschicht und eine mindestens abschnittsweise mit einer Verschleißschicht beschichtete Holzwerkstoff-Platte.

Holzwerkstoff-Platten bzw. Paneele, insbesondere Fußbodenpaneele, sind in der Regel mit einer Beschichtung versehen, die Hartstoff-Partikel, typischerweise Korundpartikel, enthält. Die Hartstoff-Partikel schaffen eine abriebfeste Oberfläche und gewährleisten damit die erforderliche Langlebigkeit des Fußbodenpaneels. Die Hartstoff- oder Korundpartikel sind jedoch nicht nur im späteren Gebrauch des Paneels sondern auch in der Handhabung und in der Herstellung des beschichteten Paneels sehr abrasiv. Insbesondere beim Aushärten der Beschichtung aus Kunstharz in der Presse werden die empfindlichen Oberflächen der Pressbleche durch die Korundpartikel beschädigt.

Um solchen Beschädigungen der Pressbleche durch Hartstoff- bzw. Korundpartikel entgegenzuwirken, werden verschiedene Maßnahmen vorgeschlagen. Die WO 00/044 576 lehrt, der bekannten Beschichtungszusammensetzung für Fußbodenpaneele aus Kunstharz, Korund und Wasser zusätzlich Cellulosefasern beizumischen, die gewissermaßen als Dämpfer zwischen Korundpartikeln und Pressblechen wirken sollen. Auch die EP 1 697 133 und die WO 02/066265 A1 schlagen eine Verschleißschicht vor, bei der Hartstoffpartikel und Fasern in eine Kunstharzschicht eingebettet sind. Diese Lösungen führen bereits zu einer gewissen Verbesserung, lösen das Problem jedoch noch nicht zufriedenstellend, weil sich bspw. zahlreiche Fasern zwischen den Korundpartikeln befinden, nicht aber zwischen den Partikeln und dem Pressblech.

Die DE 195 08 797 schlägt vor, auf die Korund enthaltende Kunstharz-Schicht eine weitere Schicht aus kunstharzimprägnierten Papier aufzubringen. Hier sind die Fasern an der richtigen Stelle, es handelt sich jedoch um eine technisch und wirtschaftlich aufwändige Lösung. Zum einen muss neben dem Overlay nun noch eine weitere blattförmige Lage Material in der Presse angeordnet und ausgerichtet werden. Zum anderen muss die vollflächige Verbindung zwischen Overlay und Faserlage gewährleistet werden; es dürfen sich also beim Verpressen keine Blasen bilden. Schließlich ist die Herstellung des kunstharzimprägnierten Papiers aufwändig und kostenintensiv.

Die WO2006/013463 schlägt ein bedrucktes Overlaypapier vor, dass auf der Oberseite mit einer Schicht aus Kunstharz und Korund und nachfolgend mit einer Schicht aus Kunstharz und Fasern beschichtet ist. Dieser Schichtaufbau ist aufgrund des notwendigen Vermischens des Kunstharzes mit den Fasern vor dem Auftragen zeitaufwändig und teuer. Weiter kommt hinzu, dass auch hierdurch keine vollständige Abdeckung der Korundharzschicht gewährleistet ist, da die Fasern unsortiert sind und somit große Bereiche der korundhaltigen Schicht nicht vollständig überdeckend vorliegen. Hinzukommt, dass beide Schichten nass-in-nass aufgetragen werden, so dass die Zellulosefasern zwischen das Korund sinken.

Die Aufgabe der Erfindung besteht also darin, eine wirtschaftliche Lösung für den Schutz der Pressbleche beim Aushärten von Korund enthaltenden Kunstharzen auf Holzwerkstoff-Paneelen vorzuschlagen.

Diese Aufgabe wird gelöst mit einem Verfahren zum Herstellen einer Holzwerkstoffplatte mit einer Verschleißschicht durch
- mindestens abschnittsweises Aufbringen einer ersten Kunstharz-Schicht auf die Holzwerkstoffplatte oder auf kunstharzimprägnierten Papierbahnen,
- mindestens abschnittsweises Auftragen einer zweiten Kunstharz-Schicht auf die erste Kunstharz-Schicht,
- Verpressen und Aushärten der ersten und der zweiten Kunstharz-Schicht auf derHolzwerkstoffplatte oder
- Trocknen der ersten und zweiten Kunstharz-Schicht auf der Papierbahn, Ausrichten der Papierbahn auf einer Holzwerkstoffplatte und anschließendes Verpressen und Aushärten der ersten und zweiten Kunstharz-Schicht sowie der Papierbahn auf einer Holzwerkstoffplatte,
dadurch gekennzeichnet, dass
- die erste Kunstharzschicht Korund und Fasern enthält und
- auf die zweite Kunstharz-Schicht vor dem Verpressen auf der Holzwerkstoffplatte oder vor dem Trocknen auf der Papierbahn Fasern gestreut werden, wobei mindestens ein Teil der Fasern eine geringere Saugfähigkeit aufweist als α-Cellulosefasern.

Das erfindungsgemäße Verfahren kann also sowohl unmittelbar auf der Oberfläche von Holzwerkstoffplatten ausgeführt werden, insbesondere, wenn diese mit einem Dekor im Direktdruckverfahren versehen wurden. Alternativ kann das Verfahren aber auch auf kunstharzimprägnierten Papieren (Overlays) angewandt werden, die mit einer Verschleißschicht versehen werden sollen. Solche Overlays werden, nachdem die Kunstharz-Schichten aufgebracht wurden, zunächst getrocknet, so dass sie transportiert und gelagert werden können. Erst nach dem Ausrichten auf Holzwerkstoffplatten werden sie durch Verpressen in Kurztaktpressen auf die Platten aufgebracht. Während des Verpressens härten die Kunstharz-Schichten vollständig aus, so dass ein gebrauchsfertig mit einer Verschleißschicht beschichtetes Paneel entsteht.

Die Erkenntnis, die der erfindungsgemäßen Lösung zugrunde liegt, ist, dass sich die Schutzwirkung der Fasern auch dann entfaltet, wenn die Fasern nicht als aufwändig zu fertigende Papierbahn ausgebildet sind, sondern wenn lose sie als Einzelfaser unmittelbar in die zweite Kunstharz-Schicht eingetragen werden. Damit wird die Herstellung der Papierbahn und die Verarbeitung einer separaten Lage Materials, die nach dem Stand der Technik (WO 00/044 576) erforderlich ist, beim Verpressen gespart.

Die verwendeten Fasern können aus unterschiedlichen Werkstoffen bestehen. Unter den organischen Fasern sind vor allem Cellulosefasern, insbesondere α-Cellulosefasern, aber auch Naturfasern oder Viskosefasern geeignet. Sind die verfügbaren Fasern, z. B. Naturfasern oder Viskosefasern im Rohzustand zu grob, können sie durch Mahlung auf die gewünschten Dimensionen gebracht werden. Es können Glasfasern, Kunststofffasern, Keramikfasern, anorganische Fasern, z. B. Asbest, oder auch andere organische Fasern eingesetzt werden. Auch Mischungen solcher Fasern können eingesetzt werden.

Erfindungsgemäß werden Fasern eingesetzt, deren Saugfähigkeit geringer ist als die Saugfähigkeit von α-Cellulosefasern. Besonders bevorzugt wird der Einsatz von organischen Fasern, die eine gegenüber der ursprünglichen Saugfähigkeit verminderte Saugfähigkeit aufweisen. Die Saugfähigkeit organischer Fasern wird beispielsweise für cellulosehaltige Fasern eingestellt, indem feuchte Fasern oder mit Wasser benetzte Fasern scharf getrocknet werden, so dass die Oberfläche der Faser wesentlich weitgehender getrocknet wird als das Innere der Faser. Diese Übertrocknung (die Verhornung) ist teilweise irreversibel, so dass die Saugfähigkeit der Faser dauerhaft vermindert ist. Das Ausmaß der Minderung lässt sich durch Einstellung der Trocknungsbedingungen einstellen. Die Saugfähigkeit von organischen Fasern, insbesondere von Cellulosefasern kann auch durch Beschichtung z. B. mit Wachsen oder Ölen herabgesetzt werden. Solche beschichteten Fasern werden zum Beispiel für die Herstellung von Papiertaschentüchern eingesetzt.

Vorteilhaft ist der Einsatz von Fasern mit einer gegenüber der ursprünglichen Saugfähigkeit um bis zu 30 %, besonders bevorzugt um bis zu 50 %, insbesondere um bis zu 70 % verminderten Saugfähigkeit. Diese in ihrer Saugkraft reduzierten Fasern verhalten sich in dem noch feuchten Kunstharz, auf das sie aufgetragen werden, günstig, weil sie der wässrigen Kunstharz-Dispersion nur so viel Wasser entziehen, wie gewünscht ist, z. B. um die Fasern gut in die Kunstharz-Dispersion einzubetten. Die Fasern nehmen nicht so viel Wasser auf -und werden damit nicht so schwer-, dass sie zwischen die Hartstoff- bzw. Korundpartikel absinken. Sie bleiben als Schicht zwischen Partikeln und Pressblech erhalten.

Der Ausdruck "Schicht" wird im Zusammenhang mit dieser Erfindung und bezogen auf die aufgetragenen Fasern nicht so verstanden, dass eine vollständige Abdeckung der ersten Kunstharz-Schicht mit Fasern erfolgt. Dies ist weder erforderlich noch gewünscht, da hierunter die Transparenz der Beschichtung leiden würde. Vielmehr beschreibt der Ausdruck "Schicht", dass die aufgetragenen Fasern ganz überwiegend in einer Ebene über den Hartstoff- bzw. Korundpartikeln verbleiben, dass sie also nicht zwischen die Korundpartikel absinken und sich mit diesen vermischen.

Nach einer bevorzugten Ausführung des erfindungsgemäßen Verfahrens werden Fasern mit einer Länge von mindestens 45 µm, bevorzugt von mindestens 60 µm, besonders bevorzugt von mindestens 90 µm, insbesondere von mindestens 120 µm verwendet. Werden längere Fasern eingesetzt, ergibt sich eine besonders gute Schichtbildung. Bisher war der Einsatz längerer Fasern nicht möglich, da die Fasern, die gemeinsam mit den Korundpartikeln eingesetzt werden, kurz sein müssen, um -infolge der Mischung mit den Korundpartikeln- die Bildung von Faserknäulen zu vermeiden.

Es ist als besonderer Vorteil der Erfindung anzusehen, dass nach einer vorteilhaften Ausführung der Erfindung bereits geringe Fasermengen genügen, um einen wirksamen Schutz der Pressbleche zu gewährleisten. Es genügen 8 g/m² bis 30 g/m² Fasern, um den gewünschten Schutzeffekt zu erreichen. Bevorzugt werden 10 g/m² bis 20 g/m² eingesetzt, vorteilhaft 12 g/m² bis 15 g/m². Auch hier ergibt sich in der Regel ein wirtschaftlicher Vorteil gegenüber dem Stand der Technik, da Papiere mit einem Flächengewicht von 80 g/m² zum Einsatz kommen. Das Aufbringen geringer Mengen Fasern in gleichmäßiger Verteilung ist ohne weiteres möglich geeignete Walzen-Streuanlagen oder Wind-Streuanlagen sind aus dem Stand der Technik bekannt, z. B. aus der WO 00/044 576.

Die Menge an Kunstharz im Verhältnis zur Menge der Fasern kann für die zweite Kunstharz-Schicht in einem weiten Bereich eingestellt und so individuell an die gewünschten Oberflächeneigenschaften der Beschichtung, z. B. Abriebfestigkeit, Transparenz oder Schichtdicke angepasst werden. Bevorzugt wird für die zweite Kunstharz-Schicht eine Menge von 10 g/m² bis 30 g/m² Kunstharz, bevorzugt duroplastisches Kunstharz, insbesondere Melaminharz aufgebracht, vorzugsweise in einer Menge von 15 g/m² bis 25 g/m², insbesondere von 20 g/m².

Zur Herstellung einer Verschleißschicht auf Holzwerkstoff-Paneelen werden meist duroplastische Kunstharze, vor allem Melaminharze, eingesetzt. Bei einfachen Produkten kann eine Kunstharz-Schicht genügen, erfindungsgemäß werden zwei Kunstharz-Schichten aufgetragen. Die erste Kunstharz-Schicht enthält -wie beschrieben- Hartstoff-Partikel, typischerweise Korundpartikel, die die Abriebfestigkeit der Oberfläche gewährleisten. Neben den Hartstoff-Partikeln sind Fasern in die erste Kunstharz-Schicht eingearbeitet. Die zweite Kunstharz-Schicht überdeckt die erste Kunstharz-Schicht. In die zweite Kunstharz-Schicht sind Fasern eingestreut, die in einer Ebene über den Korundpartikeln liegen.

Die erste und die zweite Kunstharz-Schicht werden entweder direkt auf die Oberfläche einer Holzwerkstoff-Platte oder eines -Paneels aufgetragen, z. B. durch Walzenauftrag. Die geschieht besonders bei Platten, die zuvor direkt bedruckt wurden. Alternativ wird eine kunstharzimprägnierte Papierbahn mit einer ersten und zweiten Kunstharz-Schicht beschichtet und getrocknet. Durch das Trocknen wird die so beschichtete Papierbahn (das Overlay) blockfrei; das Overlay klebt also nicht mehr bei Berührung. Sie kann also gestapelt und gelagert werden. Die so getrockneten Kunstharze des Overlays sind jedoch noch so reaktiv, dass sie beim Verpressen durch Aushärten eine feste Bindung mit der Holzwerkstoff-Oberfläche eingehen und eine gebrauchsfähige Oberfläche ergeben. Ein solches Overlay wird -ggf. mit Dekorpapieren, die zwischen Holzwerkstoffplatte und Overlay angeordnet werden- auf einer Holzwerkstoffplatte ausgerichtet. Die meisten Beschichtungen von Holzwerkstoff-Paneelen enthalten neben den genannten Kunstharz-Schichten noch weitere Schichten, z. B. Grundierungen, Dekorschichten oder Dekorpapiere, Farb- und/oder Lackschichten. Dies hindert die Anwendung des erfindungsgemäßen Verfahrens nicht.

Das erfindungsgemäße Verfahren lässt sich also sowohl bei direkt beschichteten Holzwerkstoff-Paneelen oder -Platten als auch bei Platten anwenden, die mit Overlays beschichtet werden. Die entweder direkt oder mittels eines Overlays auf die Holzwerkstoffplatte aufgebrachte Verschleißschicht wird bei hoher Temperatur und hohem Druck in Pressen, meist Kurztaktpressen ausgehärtet, so dass eine gebrauchsfertige Oberfläche entsteht. Beim Verpressen kommen die Bleche der Presse nicht mit den Hartstoff-Partikeln in Berührung, die Fasern, die in die zweite Kunstharz-Schicht eingestreut wurden, verhindern einen unmittelbaren, störenden Kontakt zwischen Korund und Pressblechen.

Gegenstand der Erfindung ist weiter ein Holzwerkstoff-Paneel gemäß Anspruch 10 mit einer Verschleißschicht, die mindestens abschnittsweise aufgetragen ist. Die Verschleißschicht weist eine erste Kunstharz-Schicht auf, in die Korund und Fasern eingebettet sind. Von der Oberfläche des Holzwerkstoff-Paneels gesehen- weist die Verschleißschicht eine oberhalb der ersten Kunstharz-Schicht angeordnete zweite Kunstharz-Schicht auf, in die Fasern als Schicht eingebettet sind. Die erfindungsgemäße Schicht von Fasern unterscheidet sich von dem aus dem Stand der Technik (DE 195 08 797) bekannten kunstharzimprägnierten Papier, da die Fasern keine Papierbahn bilden, bei der die Fasern über Kontaktstellen aneinander gebunden sind. Vielmehr ist es eine Schicht von eingestreuten Einzelfasern, die in Kunstharz eingebettet sind.

Die Verschleißschicht des Holzwerkstoff-Paneels kann -wie vorstehend beschriebenentweder als direkte Beschichtung der zwei Kunstharz-Schichten oder als Overlay, also als imprägnierte Papierbahn mit zwei auf die Papierbahn aufgebrachten Kunstharz-Schichten auf das Paneel aufgebracht worden sein. Die Kunstharz-Schicht bzw. die Kunstharz-Schichten weisen bevorzugt duroplastische Kunstharze, insbesondere Melaminharze auf. Als Fasern können erfindungsgemäß die vorstehend genannten schichtbildenden Fasern eingesetzt werden. Besonders geeignet sind α-Cellulosefasern, deren Saugkraft gegenüber der ursprünglichen Saugkraft verringert ist, beispielsweise durch Verhornung infolge Übertrocknung oder durch Beschichtung der Fasern mit hydrophobierenden Stoffen, z. B. mit Ölen oder Wachsen.

Details einer Ausführungsform der Erfindung werden nachfolgend an Hand eines Ausführungsbeispiels erläutert. Es zeigt:
- Fig. 1: eine schematische Darstellung einer Vorrichtung zum Auftragen von Fasern auf ein Holzwerkstoff-Paneel oder auf ein Overlay,
- Fig. 2: eine schematische Darstellung eines mittels einer Vorrichtung nach Fig. 1 beschichteten Paneels und
- Fig. 3: eine schematische Darstellung eines erfindungsgemäß beschichteten Overlays zur Verwendung auf einem Holzwerkstoff-Paneel.

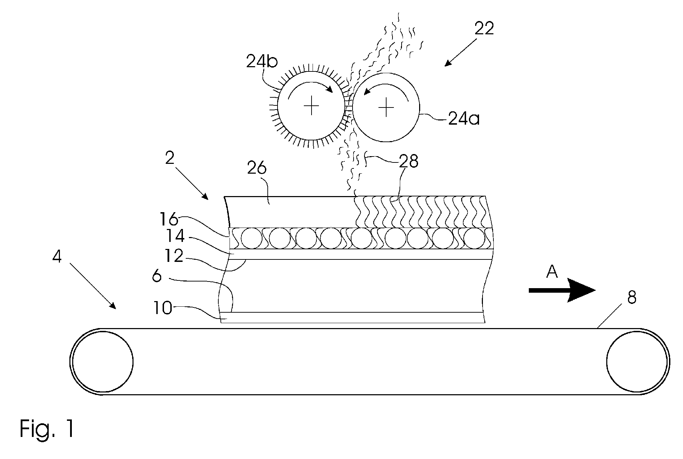

Fig. 1 zeigt eine Fördervorrichtung 4 zum Streuen von Fasern in eine Kunstharz-Schicht. Ein Holzwerkstoff-Paneel 2 aus einer 6 mm Hartfaserplatte, das mit einer ersten und mit einer zweiten Kunstharz-Schicht beschichtet ist (Details hierzu nachfolgend), wird in Arbeitsrichtung A gefördert. Die Fördervorrichtung 4 ist als angetriebenes, umlaufendes Förderband ausgelegt. Alternativ können beispielsweise übliche Walzenförderer eingesetzt werden. Oberhalb der Fördervorrichtung 4 (und der darauf geförderten Paneele) ist eine Vorrichtung 22 zum Auftragen von Fasern angeordnet. Die Vorrichtung 22 umfasst ein Walzenpaar 24a, b, das sich über die Breite der Anordnung erstreckt. Walze 24a dreht sich gegenläufig zur Stachel- oder Bürstenwalze 24b. Zwischen diesen Walzen werden die auf das feuchte Kunstharz aufzustreuenden Fasern über die Breite des Paneels 2 so vereinzelt und verteilt, dass die Fasern gleichmäßig in der vorgegebenen Menge zwischen 8 g/m² und 30 g/m² aufgetragen werden können. Die Steuerung der Auftragsmenge wird eingestellt, indem die Vorschubgeschwindigkeit des Holzwerkstoff-Paneels und die Abgabe der Vorrichtung 22 aufeinander abgestimmt werden.

Eine Streuwalzenanordnung ist eine einfache und zweckmäßige Vorrichtung zum Auftragen von Fasern zur Durchführung des erfindungsgemäßen Verfahrens. Andere Vorrichtungen, beispielsweise Sprüh- oder Windstreuvorrichtungen, die zum Auftragen von Faserschichten bekannt sind, können ebenfalls eingesetzt werden. Diese Vorrichtung zur Durchführung des erfindungsgemäßen Verfahrens ist eingefügt zwischen der vorangehenden Vorrichtung zum Auftragen der ersten, korundhaltigen Kunstharz-Schicht oder der zweiten Kunstharz-Schicht und der nachfolgenden Anlage zum Trocknen oder zum Verpressen und Aushärten der Beschichtung.

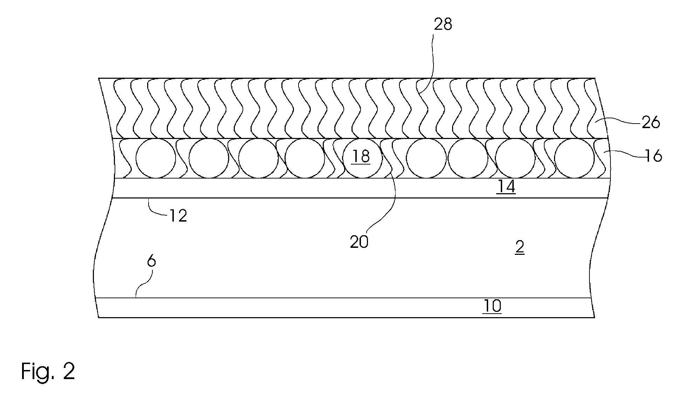

Das auch in Fig. 2 dargestellte Holzwerkstoff-Paneel 2 ist auf der Unterseite 6, die auf dem Förderband 8 aufliegt, mit einem Gegenzug 10 beschichtet. Der Gegenzug 10 ist eine faserverstärkte Kunstharz-Schicht. Auch auf der Oberseite 12 ist das Holzwerkstoff-Paneel 2 beschichtet. Unmittelbar auf die Oberseite 12 des Holzwerkstoff-Paneels ist eine Grundierung 14 aufgetragen. Die Grundierung schafft eine ebene Oberfläche und einen farblich einheitlichen Untergrund. Auf die Grundierung 14 ist eine erste Kunstharz-Schicht 16 aufgetragen, die Korundpartikel 18 und Fasern 20 enthält. Als Kunstharz wird Melamin in wässriger Dispersion (140 g/m²) eingesetzt. Die Korundpartikel 18 werden in einer Menge von 15 g/m² eingesetzt, die Fasern 20, hier α-Cellulose, werden in einer Menge von 28 g/m² eingesetzt. Es werden kurze Fasern mit einer Länge von bis zu 40 µm eingesetzt.

Auf diese erste Kunstharz-Schicht 16 ist -mittels hier nicht dargestellter Auftragswalzeneine zweite, dünne Kunstharz-Schicht 26, ebenfalls eine wässrige Melaminharz-Dispersion, aufgetragen in einer Menge von 20 g/m². Dann wird das so beschichtete Holzwerkstoff-Paneel weiter gefördert und passiert die oberhalb des Holzwerkstoff-Paneels angeordnete Vorrichtung 22 zum Auftragen von Fasern.

Auf diese noch feuchte zweite Kunstharz-Schicht 26 werden 15 g/m² α-Cellulose-Fasern 28 gestreut. Die Fasern 28 sind 60 µm lang und weisen eine gegenüber der ursprünglichen Saugfähigkeit eine um 50 % reduzierte Saugfähigkeit auf. Die reduzierte Saugfähigkeit ergibt sich daraus, dass die α-Cellulose-Fasern 28 scharf übertrocknet wurden, so dass die Oberfläche der Fasern 28 verhornt ist und deshalb nicht mehr wie vorher aufnahmefähig für Wasser ist. Diese Fasern 28 werden in trockenem, rieselfähigen Zustand eingesetzt. Die Fasern 28 nehmen zwar etwas Feuchtigkeit aus der wässrigen Kunstharz-Dispersion der zweiten Kunstharz-Schicht 26 auf und haften dadurch auf der zweiten Kunstharz-Schicht bzw. werden darin eingebettet. Sie sinken aber nicht durch die Kunstharz-Schicht 26 hindurch. Sie bilden auf diese Weise mit der Kunstharz-Dispersion eine Schicht 26 oberhalb der ersten, Korund enthaltenden Kunstharz-Schicht 16 und schützen beim späteren Verpressen die Bleche der Kurztaktpresse, wenn das so beschichtete Holzwerkstoff-Paneel bei 30 bar und 180 °C verpresst wird, wobei Beschichtung bzw. Overlay und Paneel durch Aushärten des Kunstharzes miteinander verbunden werden.

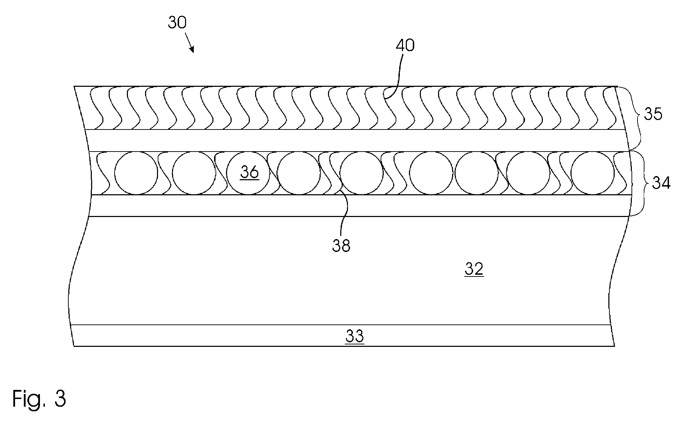

Fig. 3 zeigt eine alternative Ausführung der Erfindung. Dargestellt ist ein Overlay 30, also ein beidseitig mit Kunstharz beschichtetes Trägerpapier 32, das zur Beschichtung von Holzwerkstoff-Paneelen, insbesondere von Fußbodenpaneelen vorgesehen ist. Auf der Unterseite des mit Kunstharz imprägnierten Trägerpapiers 32 befindet sich eine dünne Schicht 33 Melaminharz. Auf der Oberseite des Trägerpapiers ist eine erste Kunstharz-Schicht 34 aufgetragen, in die Korundpartikel 36 und Fasern 38 eingebettet sind. Korundpartikel, Fasern und Melaminharz entsprechend der Zusammensetzung, die für das vorstehende Ausführungsbeispiel vorbeschrieben ist. Auf die erste Kunstharz-Schicht 34 wird eine zweite Kunstharz-Schicht 35 aufgetragen. Das so mit einer ersten und mit einer zweiten Kunstharz-Schicht 34, 35 beschichtete Trägerpapier 32 wird durch eine in Fig. 1 skizzierte Anlage gefördert. In die noch feuchte Melaminharz-Oberfläche der zweiten Kunstharz-Schicht 35 werden 10 g/m² Glasfasern 40 mit einer Länge von 90 µm eingestreut. Die aufgestreuten Glasfasern sinken nicht in die erste Kunstharz-Schicht 34 zwischen die Korundpartikel, vielmehr bleiben sie als lockeres Netzwerk bzw. als Schicht 35 erhalten.

Das so hergerichtete Overlay 30 wird dann getrocknet auf einen Feuchtegehalt von ca. 8 Gewichts-% bezogen auf das ofentrockene Overlay 30. Damit kann das Overlay 30 gestapelt, gelagert und transportiert werden. Zur weiteren Verarbeitung (hier nicht dargestellt) wird das Overlay 30 auf die Oberseite eines Holzwerkstoff-Paneels 2 aufgelegt und in einer Presse bei 30 bar und 180 °C verpresst. Unter diesen Bedingungen härtet das Kunstharz vollständig aus, das Overlay ist dann fest mit dem Holzwerkstoff-Paneel verbunden, so dass das Holzwerkstoff-Paneel dann eine verschleißfeste Oberfläche aufweist, die es z. B. als Fußbodenbelag geeignet macht.

Zum Verpressen ist die Korund enthaltende erste Kunstharz-Schicht 34, gesehen von der Oberseite des Holzwerkstoff-Paneels 2 aus, zum Pressblech hin durch die faserhaltige zweite Kunstharz-Schicht 35 abgedeckt. Ein übermäßiger Verschleiß der Pressbleche wird damit vermieden.

## Patentansprüche

1. Verfahren zum Herstellen einer Holzwerkstoffplatte (2) mit einer Verschleißschicht durch
- mindestens abschnittsweises Aufbringen einer ersten Kunstharz-Schicht (16, 34) auf die Holzwerkstoffplatte (2) oder auf kunstharzimprägnierten Papierbahnen,
- mindestens abschnittsweises Auftragen einer zweiten Kunstharz-Schicht (26, 35) auf die erste Kunstharz-Schicht (16, 34),
- Verpressen und Aushärten der ersten und der zweiten Kunstharz-Schicht (16, 26) auf der Holzwerkstoffplatte (2) oder
- Trocknen der ersten und zweiten Kunstharz-Schicht (34, 35) auf der Papierbahn (32), Ausrichten der Papierbahn (32) auf einer Holzwerkstoffplatte und anschließendes Verpressen und Aushärten der ersten und zweiten Kunstharz-Schicht (34, 35) sowie der Papierbahn (32) auf einer Holzwerkstoffplatte,
**dadurch gekennzeichnet, dass**
- die erste Kunstharzschicht (16, 34) Korund (18, 36) und Fasern (20, 38) enthält und
- dass auf die zweite Kunstharzschicht (26, 35) vor dem Verpressen auf der Holzwerkstoffplatte (2) oder vor dem Trocknen auf der Papierbahn (32) Fasern (28) gestreut werden, wobei mindestens ein Teil der Fasern (28) eine geringere Saugfähigkeit aufweist als α-Cellulosefasern.

2. Verfahren nach Anspruch 1, **dadurch gekennzeichnet, dass** die Fasern (28) schichtbildende Fasern (28) sind.

3. Verfahren nach Anspruch 1 oder 2, **dadurch gekennzeichnet, dass** organische Fasern, insbesondere α-Cellulosefasern, Naturfasern oder Viskosefasern, Glasfasern, Kunststofffasern, Keramikfasern oder anorganische Fasern einzeln oder in Mischung eingesetzt werden.

4. Verfahren nach Anspruch 3, **dadurch gekennzeichnet, dass** organischen Fasern eingesetzt werden, die eine gegenüber der ursprünglichen Saugfähigkeit verminderte Saugfähigkeit aufweisen, nämlich eine Saugfähigkeit, die bis zu 30 %, vorzugsweise bis zu 50 %, bevorzugt bis zu 70 % der ursprünglichen Saugfähigkeit beträgt.

5. Verfahren nach Anspruch 4, **dadurch gekennzeichnet, dass** übertrocknete, verhornte Cellulosefasern und/oder beschichtete Cellulosefasern eingesetzt werden.

6. Verfahren nach mindestens einem der vorangehenden Ansprüche, **dadurch gekennzeichnet, dass** die Fasern (28) eine Länge von mindestens 45 µm, bevorzugt von mindestens 60 µm, vorteilhaft von mindestens 90 µm, insbesondere von mindestens 120 µm aufweisen.

7. Verfahren nach mindestens einem der vorangehenden Ansprüche, **dadurch gekennzeichnet, dass** die Fasern (28) in einer Menge von 8 g/m² bis 30 g/m² aufgetragen werden, bevorzugt in einer Menge von 10 g/m² bis 20 g/m², insbesondere von 12 g/m² bis 15 g/m².

8. Verfahren nach mindestens einem der vorangegangenen Ansprüche, **dadurch gekennzeichnet, dass** die zweite Kunstharz-Schicht (26, 35) in einer Menge von 10 g/m² bis 30 g/m² aufgebracht wird, vorzugsweise in einer Menge von 15 g/m² bis 25 g/m², insbesondere von 20 g/m².

9. Verfahren nach mindestens einem der vorangehenden Ansprüche, **dadurch gekennzeichnet, dass** zur Beschichtung eines Holzwerkstoff-Paneels (2) neben der ersten und ggf. der zweiten Kunstharz-Schichten (16, 26, 34, 35) weitere Schichten aufgetragen werden, insbesondere Grundierungen (14), Dekorschichten, Farb- und oder Lackschichten.

10. Holzwerkstoff-Paneel, das mindestens abschnittsweise mit einer Beschichtung versehen ist, wobei die Beschichtung eine erste Kunstharz-Schicht (16), in die erste Kunstharz-Schicht (16) eingebettetes Korund (18) sowie Fasern (20) und - von der Oberfläche des Holzwerkstoff-Paneels (2) gesehen- eine oberhalb des Korunds (18) angeordnete zweite Kunstharz-Schicht (26) aufweist, in die Fasern (28) als Schicht eingebettet sind, wobei mindestens ein Teil der Fasern (28) eine geringere Saugfähigkeit aufweist als α-Cellulosefasern.

11. Holzwerkstoff-Paneel nach Anspruch 10, **dadurch gekennzeichnet, dass** als Kunstharz duroplastisches Kunstharz, insbesondere Melaminharz eingesetzt ist.

12. Holzwerkstoff-Paneel nach Anspruch 10 oder 11, **dadurch gekennzeichnet, dass** in der zweiten Kunstharz-Schicht (26) organische Fasern, insbesondere α-Cellulose, Naturfasern, Viskosefasern, Glasfasern, Kunststofffasern, Keramikfasern oder anorganische Fasern einzeln oder in Mischung eingebettet sind.

## Claims

1. A method for producing a composite wood board (2) with a wear layer by:
- applying, at least sectionally, a first artificial resin layer (16, 34) on the composite wood board (2) or on artificial-resin-impregnated paper webs,
- applying, at least sectionally, a second artificial resin layer (26, 35) on the first artificial resin layer (16, 34),
- pressing and curing the first and second artificial resin layer (16, 26) on the composite wood board (2) or
- drying the first and second artificial resin layer (34, 35) on the paper web (32), aligning the paper web (32) on a composite wood board, and subsequent pressing and curing the first and second artificial resin layer (34, 35) as well as the paper web (32) on a composite wood board,
**characterized in that**
- the first artificial resin layer (16, 34) contains corundum (18, 36) and fibers (20, 38), and
- fibers (28) are strewn on the second artificial resin layer (26, 35) before being pressed on the composite wood board (2) or before being dried on the paper web (32), wherein at least part of the fibers (28) has an absorbency that is less than α-cellulose fibers.

2. The method according to claim 1, **characterized in that** the fibers (28) are layer-worming fibers (28).

3. The method according to claim 1 or 2, **characterized in that** organic fibers, especially α-cellulose fibers, natural fibers or viscous fibers, glass fibers, plastic fibers, ceramic fibers or inorganic fibers are used individually or in a mixture.

4. The method according to claim 3, **characterized in that** organic fibers are used which have an absorbency that is less than the original absorbency, that is, an absorbency which is up to 30%, preferably up to 50%, and preferentially up to 70% of the original absorbency.

5. The method according to claim 4, **characterized in that** dried, homy cellulose fibers and/or coated cellulose fibers are used.

6. The method according to at least one of the preceding claims, **characterized in that** the fibers (28) have a length of at least 45 µm, preferably at least 60 µm, advantageously at least 90 µm, and in particular at least 120 µm.

7. The method according to at least one of the preceding claims, **characterized in that** the fibers (28) are applied in an amount of 8 g/m² to 30 g/m², preferably in an amount of 10 g/m² to 20 g/m², and in particular from 12 g/m² to 15 g/m².

8. The method according to at least one of the preceding claims, **characterized in that** the second artificial resin layer (26, 35) is applied in an amount of 10 g/m² to 30 g/m², preferably in an amount of 15 g/m² to 25 g/m², and in particular 20 g/m².

9. The method according to at least one of the preceding claims, **characterized in that** additional layers are applied beyond the first and possibly second artificial resin layers (16, 26, 34, 35) to coat a composite wood panel (2), in particular primers (14), decorative layers, paint and/or varnish layers.

10. The composite wood panel that is provided, at least sectionally, with a coating, wherein the coating has a first artificial resin layer (16), corundum (18) embedded in the first artificial resin layer (16) as well as fibers (20) and, viewed from the surface of the composite wood panel (2), a second artificial resin layer (26) arranged above the corundum (18) in which fibers (28) are embedded as a layer, wherein at least part of the fibers (28) have an absorbency that is less than α-cellulose fibers.

11. The composite wood panel according to claim 10, **characterized in that** duroplastic artificial resin, especially melamine resin, is used as the artificial resin.

12. The composite wood panel according to claim 10 or 11, **characterized in that** organic fibers, especially α-cellulose fibers, natural fibers, viscous fibers, glass fibers, plastic fibers, ceramic fibers or inorganic fibers are embedded individually or in a mixture in the second artificial resin layer (26).

## Revendications

1. Procédé de fabrication d'une plaque de matière dérivée du bois (2) avec une couche d'usure par
- l'application, au moins par tronçons, d'une première couche de résine synthétique (16, 34) sur la plaque de matière dérivée du bois (2) ou sur des bandes de papier imprégnées de résine synthétique,
- l'application, au moins par tronçons, d'une deuxième couche de résine synthétique (26, 35) sur la première couche de résine synthétique (16, 34),
- le pressage et le durcissement de la première et de la deuxième couche de résine synthétique (16, 26) sur la plaque de matière dérivée du bois (2), ou
- le séchage de la première et de la deuxième couche de résine synthétique (34, 35) sur la bande de papier (32), l'alignement de la bande de papier (32) sur une plaque de matière dérivée du bois et puis le pressage et le durcissement de la première et de la deuxième couche de résine synthétique (34, 35) ainsi que de la bande de papier (32) sur une plaque de matière dérivée du bois,
**caractérisé en ce que**
- la première couche de résine synthétique (16, 34) contient du corindon (18, 36) et des fibres (20, 38), et
- **en ce que** des fibres (28) sont dispersées sur la deuxième couche de résine synthétique (26, 35) avant le pressage sur la plaque de matière dérivée du bois (2) ou avant le séchage sur la bande de papier (32), au moins une partie des fibres (28) présentant un pouvoir d'absorption plus faible que des fibres de cellulose α.

2. Procédé selon la revendication 1, **caractérisé en ce que** les fibres (28) sont des fibres (28) formant une couche.

3. Procédé selon la revendication 1 ou 2, **caractérisé en ce que** des fibres organiques, en particulier des fibres de cellulose α, des fibres naturelles ou des fibres de viscose, des fibres de verre, des fibres en matière plastique, des fibres céramiques ou des fibres anorganiques sont utilisées seules ou dans un mélange.

4. Procédé selon la revendication 3, **caractérisé en ce que** des fibres organiques sont utilisées, qui présentent un pouvoir d'absorption réduit par rapport au pouvoir d'absorption original, à savoir un pouvoir d'absorption qui représente jusqu'à 30 %, de préférence jusqu'à 50%, préférablement jusqu'à 70 % du pouvoir d'absorption original.

5. Procédé selon la revendication 4, **caractérisé en ce que** des fibres de cellulose surséchées et cornées et/ou des fibres de cellulose revêtues sont utilisées.

6. Procédé selon au moins une des revendications précédentes, **caractérisé en ce que** les fibres (28) présentent une longueur d'au moins 45 µm, de préférence d'au moins 60 µm, avantageusement d'au moins 90 µm, en particulier d'au moins 120 µm.

7. Procédé selon au moins une des revendications précédentes, **caractérisé en ce que** les fibres (28) sont appliquées à raison d'une quantité de 8 g/m² à 30 g/m², de préférence à raison d'une quantité de 10 g/m² à 20 g/m², en particulier de 12 g/m² à 15 g/m².

8. Procédé selon au moins une des revendications précédentes, **caractérisé en ce que** la deuxième couche de résine synthétique (26, 35) est appliquée à raison d'une quantité de 10 g/m² à 30 g/m², de préférence à raison d'une quantité de 15 g/m² à 25 g/m², en particulier de 20 g/m².

9. Procédé selon au moins une des revendications précédentes, **caractérisé en ce que**, pour le revêtement d'un panneau de matière dérivée du bois (2), outre les premières et éventuellement les deuxième couches de résine synthétique, (16, 26, 34, 35), d'autres couches sont appliquées, en particulier des couches de fond (14), des couches décoratives, des couches de peinture et ou de laque.

10. Panneau de matière dérivée du bois, qui est muni d'un revêtement au moins par tronçons, le revêtement présentant une première couche de résine synthétique (16), du corindon (18) noyé dans la première couche de résine synthétique (16) ainsi que des fibres (20) et - vu à partir de la surface du panneau de matière dérivée du bois (2) - une deuxième couche de résine synthétique (26) disposée au-dessus du corindon (18) et dans laquelle des fibres (28) sont noyées en tant que couche, au moins une partie des fibres (28) présentant un pouvoir d'absorption plus faible que des fibres de cellulose α.

11. Panneau de matière dérivée du bois selon la revendication 10, **caractérisé en ce que**, en tant que résine synthétique, une résine synthétique duroplastique, en particulier une résine de mélamine, est utilisée.

12. Panneau de matière dérivée du bois selon la revendication 10 ou 11, **caractérisé en ce que** des fibres organiques, en particulier de la cellulose α, des fibres naturelles ou des fibres de viscose, des fibres de verre, des fibres en matière plastique, des fibres céramiques ou des fibres anorganiques sont noyées, seules ou dans un mélange, dans la deuxième couche de résine synthétique (26).
